(19) Europäisches Patentamt
European Patent Office
Office européen des brevets

(11) **EP 4 414 948 A1**

(12) **EUROPEAN PATENT APPLICATION**
published in accordance with Art. 153(4) EPC

(43) Date of publication:
**14.08.2024 Bulletin 2024/33**

(21) Application number: **22879006.9**

(22) Date of filing: **26.06.2022**

(51) International Patent Classification (IPC):
**G06V 20/56** (2022.01)      **G06V 10/22** (2022.01)
**G01S 13/89** (2006.01)

(52) Cooperative Patent Classification (CPC):
**G01S 13/89; G06V 10/22; G06V 20/56**

(86) International application number:
**PCT/RU2022/050202**

(87) International publication number:
**WO 2023/059222 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.10.2021 RU 2021128898**

(71) Applicant: **Obshchestvo s Ogranichennoi
Otvetstvennostiu
"Evokargo"
Moscow, 129085 (RU)**

(72) Inventors:
• **KABAKOV, Anatolii Evgenevich
Apsheronsk, 352690 (RU)**
• **SHIPITKO, Oleg Sergeevich
pos. Moskovskiy, 108811 (RU)**

(74) Representative: **Osmans, Voldemars et al
Agency Tria Robit
P.O. Box 22
LV-1010 Riga (LV)**

(54) **TERRAIN MAPPING METHOD FOR AUTONOMOUS VEHICLES**

(57)      The present method relates to navigation aids for highly automated autonomous vehicles (AV). According to the proposed terrain mapping method for AVs, a global terrain map is generated, which is divided into cells; said map is recorded in the memory of a mapping module of an AV on-board computer; said mapping module receives a stream of images from a camera mounted on the AV; the received images are processed and linear roadway objects are detected; a map of features of the detected linear roadway objects is generated; a local map (1) is generated, which is divided into cells; to account for errors in the detection of linear roadway objects (2), initial probability estimates for the presence of features of detected linear roadway objects in cells of the global map and of the local map are determined, wherein the probability estimate for the cells of the global map is an a priori estimate; the features of detected linear roadway objects are recorded in the corresponding cells of the global and local maps; a final map of the roadway (3) is obtained by binarizing the cells of the obtained map using a threshold value for the probability estimate for the presence of a feature of a detected linear roadway object.

EP 4 414 948 A1

## Description

## FIELD OF THE INVENTION

The method of terrain mapping for autonomous vehicles (AVs) refers to the navigation tools of highly automated AVs and is designed for automatic mapping of visual linear aspects of the roadway (road boundaries, markings, etc.), recognized in images from AV cameras, and is utilized for the deployment of AVs in a new territory.

## BACKGROUND

Mapping is a set of methods and algorithms for creating maps containing information about the environment. In robotics, digital maps are used to determine a robot's own position in space, plan the path, and prevent collisions. The map quality directly affects the accuracy of solving these tasks, so mapping is one of the fundamental problems of robotics.

Since the advent of driver assistance systems and autonomous cars, digital road maps have become an integral part of intelligent transportation systems. Moreover, there are multiple studies demonstrating that high-precision digital road maps are a key factor in creating an autonomous vehicle of classes SAE 3-5 according to the classification of the American Association of Automotive Engineers.

Despite the fact that mapping has been widely studied, there are only a small number of works devoted to the creation of high-precision maps for autonomous transport. Existing mapping methods require the use of high-precision positioning systems and sensors, such as the Global Positioning System (GPS) with real-time kinematic (RTK) and laser rangefinders (LIDAR).

Thus, the task of developing algorithms for mapping road infrastructure that do not require expensive sensor equipment and allow you to create and update high-precision digital road maps is urgent. Algorithms that use cameras as a source of sensory data fit the specified criteria. Cameras have several advantages over other sensors: they are relatively cheap, provide high spatial resolution and are not subject to interference due to their passive nature.

The following technical solutions are known from the pertinent art:

A system for determining the actual parameters of the roadway is known (RU 2683618 patent).

According to the method described in the materials of this patent, the determination of the roadway parameters includes the following steps:

1. Separation of image colors with a threshold for yellow (in HSV) and white (in RGB).

2. Applying anti-aliasing (blurring the image to remove noise).

3. Converting the image to the grayscale color mode.

4. Application of the Canny operator.

5. Range of interest preparation.

6. Applying the Hough transform to extract elements from an image.

7. Drawing semi-transparent lines on the initial image (marking lines on the video image).

This method allows to recognize the markings applied on the roadway; however, it does not describe a method for compiling and verifying the correctness of the map of the passed road markings.

There is a known method of localization and construction of navigation maps for an indoors mobile service robot (RU 2740229 patent), based on correction of the current coordinates of the robot and the traversed trajectory using stationary reflective beacons with RFD tags.

According to this method, an obstacle sub-map is built in a specific position of the robot and the layers of the constructed sub-map are updated using an RGB-D camera. The obstacle sub-map is linked to the coordinate system of the room according to the covered trajectory. When the robot moves to a given threshold value, a new obstacle sub-map is built and the layers of the constructed sub-map are updated. An obstacle sub-map is compiled into an obstacle map after building each new obstacle sub-map. Then, a global map is built using SLAM map data, a static map, and taking into account obstacle map data.

According to this method, the construction of an obstacle sub-map in a specific position of the robot and the updating of the layers of the constructed obstacle sub-map is carried out using data from an RGB-D camera, LiDAR and ultrasonic rangefinders, which requires more powerful computers, and expensive sensor equipment: it leads to an increased cost of such a system.

There is a known method for determining road boundaries, the shape and position of objects located on the road according to patent RU 2571871. The method includes obtaining frames of a grayscale image from a camera mounted on a vehicle: first the boundaries of objects are formed by converting a grayscale image into a binary image characterized by the first and second binary colors, indicating the boundaries of objects of the grayscale image with the first binary color; the image of the road surface is highlighted by filling the first monochrome color inside a closed contour of the road, limited by the first binary color; the contour of the left, right and upper borders of the image of the road surface are determined; three-dimensional objects are determined whose images come into contact with the contour of the road surface image by analyzing the shape of the contour, left, right and upper borders of the image of the road surface are used to determine the position of these objects on the road; then the method is used to highlight the images of flat objects on the road surface image that are located below the upper boundary of the contour of the road surface image and are limited by the first binary color, by filling these objects with a second monochrome color, and the shape and position of these objects on the road are determined.

The presented method is intended only for recognizing the markings of the road and its boundaries, and determining the shape and position of objects on the road, but does not allow you to create a map of the area for the AV, i. e., to map the area.

A method is known for simultaneously creating a map with multiple lanes and locating a vehicle on the generated map (US2018053060), which includes the following steps:

- detection of multiple lane markings in each of the images of the far front, middle straight, right, left and rear field of camera view;

- identification of each of the set of lane markings using the control lane markings stored in the database;

- combining identified lane markings to create a global lane map with multiple adjacent lanes for vehicles;

- localization of the main vehicle within the main traffic lane on the global lane map.

A method is known for mapping the roadway (US2021180980), which includes the following steps:

- image data detection using a camera unit;

- identification of road sections in the detected image data using a control unit;

- converting the data of the detected image, including certain areas of the roadway, into a top view and projecting the data of the transformed image onto a plane that is at the level of the surface of the roadway;

- adding sections of the roadway to the grid map on the plane;

- alignment of at least two grid maps from two different travel routes relative to each other and their combination;

- creation of a final grid map based on combined grid maps.

It is also noted that the control unit is designed to determine the probability value for each specific area of the roadway to verify the reliability of the mapping being performed and, if the probability value is higher than a predetermined threshold, mark the corresponding area of the roadway as actual roadway.

These technical solutions are characterized by the fact that errors in the detection of linear roadway objects (road markings and boundaries) from images obtained from AV cameras are not taken into account or are not fully considered, which reduces the accuracy of mapping.

In "Roadway Mapping Device" (US2021180980), it is indicated that it is possible to determine the probability value for each specific area of the roadway in order to verify the reliability of the mapping performed, while if the probability value is higher than a predetermined threshold, mark the corresponding area of the roadway as actual roadway. However, the materials of this source do not contain information on how this process is implemented. The method disclosed in US2021180980 is technically the closest to the claimed invention and can act as a prototype.

## SUMMARY

The task to be solved by the claimed invention is to create a method for accurate and reliable mapping of the terrain for AVs by recognizing linear roadway objects (road markings and boundaries) from images obtained from cameras on AVs, followed by the formation of a roadway map, taking into account errors in detecting features of linear roadway objects, while the implementation of this method does not require expensive sensor equipment.

The technical result of the claimed invention is to increase the accuracy of terrain mapping for AVs.

The claimed technical result is achieved due to the implementation of a method, according to which the following actions are performed: a global map of the area is formed and divided into cells, this map is recorded into a mapping module; cameras on AV send images to the mapping module, then the image is processed to define linear features of the roadway, a map of attributes of allocated linear features is formed; then a local map that is divided into cells to account for errors in detection of linear features of the roadway; initial assessment of the probability of finding features of a selected linear objects in the cells of the global and local maps is performed, and the evaluation of probabilities in the cells of a global map is performed a priori; the features of dedicated linear features of the roadway in the appropriate cells of global and local maps including previously known camera calibration and the current location of the AV are recorded, while the features of selected linear objects are reported in the cells of the local map in the form of the salient points of allocated polylines; these points are used to form lines; each cell in the local map is evaluated for the probability of finding the feature of a selected linear object of the roadway; the resulting part of the local map is imposed on the corresponding part of a global map with the summation of the probability estimates to detect the selected linear object of the roadway considering previous assessments; the resulting map of the roadway is formed by the binarization of the map cells to the threshold probabilities of finding the feature of a selected linear object of the roadway. In the preferred embodiment of the terrain mapping method for AVs, the recognition of linear roadway objects from images obtained from the camera is carried out using a windowed Hough transform.

## DRAWINGS

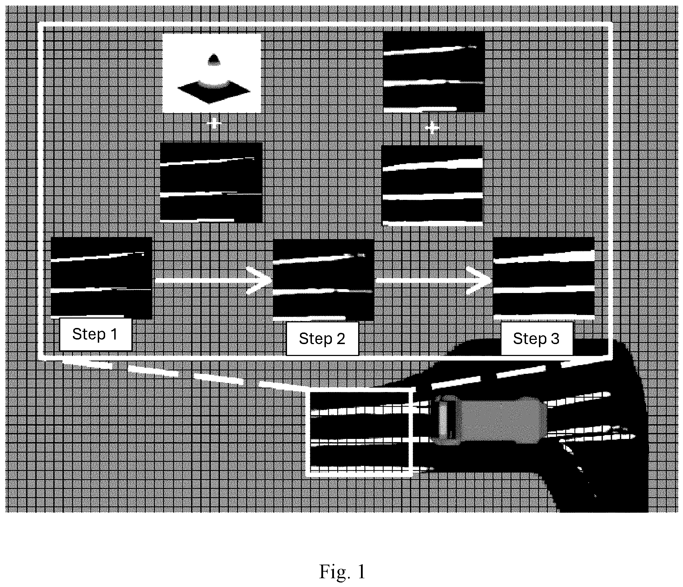

Figure 1 shows the steps of the method for accounting for errors in detecting features of linear roadway objects, where 1 is the formation of a local map section with probability estimates of finding a selected linear object feature in each cell, 2 is accounting for spatial errors in detecting features of linear roadway objects, 3 is obtaining the resulting roadway map by combining the section of the local map with the corresponding section of the global map.

## DETAILED DESCRIPTION OF THE INVENTION

The method of mapping the area for AVs is implemented as follows.
At the first stage of the implementation, a global terrain map is pre-formed, divided into cells, and the specified map is recorded in the memory of the mapping module of the AV computer.
During movement, a stream of images from cameras placed on the AV is sent to the mapping module of the on-board computer, then the received images are processed with recognition of linear objects of the roadway, preferably by a windowed Hough transform.
The linear objects of the roadway are the road markings and boundaries. After processing the image in this way, many polylines are obtained, which presumably are the road markings and boundaries recognized in the image.
Then, a map of the features of the selected linear objects of the roadway is formed.
To account for errors in the detection of linear roadway objects (Fig. 1), a local map (1) is formed, divided into cells, and initial estimates of the probability of finding features of selected linear roadway objects in the cells of the global and local maps are set, and the probability estimate in the cells of the global map is a priori.
The values of the local map cells at the time of creation are zero, and before mapping begins, for each cell of the global map, the presence or absence of linear roadway objects in it is considered equally probable, that is, the probability of this event is 0.5.
At the next stage, the features of the selected linear roadway objects are recorded in the corresponding cells of the global and local maps, taking into account the previously known calibration of the camera and the current location of the AV, while transferring from the coordinate system associated with the camera to the coordinate system associated with the map.
The features of the selected linear objects enter the cells of the local map in the form of salient points of recognized polylines, and intermediate values for constructing of lines are determined, preferably using the Bresenham algorithm. In addition, the width of the detected polylines increases in the direction perpendicular to the direction of each segment and taking into account the map scale. This is necessary to account for the road markings width as regulated by the GOST R 51256-2018 standard. (Technical means of traffic management. Road markings. Classification. Technical requirements).
The cells of the local map corresponding to the polylines expanded in this way are used to record the values of the probability of finding features of the selected linear objects; they are recorded as a logarithmic value of the probability ratio:

$$l_{\mathrm{TP}} = \log\left(\frac{P_{\mathrm{TP}}}{1-P_{\mathrm{TP}}}\right), \quad (1)$$

where $P_{\mathrm{TP}}$ is the probability of a true-positive response of the detector of linear features of roadway objects.
Image cells whose values remain zero are assigned a value equal to:

$$l_{\mathrm{TN}} = \log\left(\frac{P_{\mathrm{TN}}}{1-P_{TN}}\right), \quad (2)$$

where $P_{\mathrm{TN}}$ is the probability of a true-negative response of the detector of linear features of roadway objects.
$P_{\mathrm{TP}}$ and $P_{\mathrm{TN}}$ are preliminarily evaluated for the detector used based on experimental data.
At the next step, spatial detection errors are taken into account (2). It is assumed that the detection noise of each segment of polylines can be modeled by a two-dimensional normal distribution.
To account for the spatial detection noise, the local probability map obtained in the previous step is collapsed with a Gaussian kernel of size $n \times n$ and a standard deviation value $\sigma$.
Next, the resulting section of the local map is superimposed on the corresponding section of the global map with the summation of probability estimates of finding a feature of the selected linear roadway object, taking into account the previous assessment (3) according to:

$$L_{i,j}^{k} = l_{i,j}^{k} + l_{i,j}^{k-1} + l_{i,j}^{APR}, \quad (3)$$

where $L_{i,j}^{k}$ is the resulting estimate of the probability of finding the feature of the selected linear roadway object in the $(i,j)$ cell of the local map at the $k\text{-}th$ step;

$I^k{}_{ij}$ is the estimate of the probability of finding the feature of the selected linear roadway object in the (i, j) cell of the local map at the *k-th* step;

$I^{k-1}{}_{ij}$ is the estimation of the probability of finding a feature of a selected linear roadway object in the (i, j) cell of the local map at the *(k-1)-th* step;

$I^{APR}{}_{ij}$ is an a priori estimate of the probability of finding a feature of a selected linear roadway object in (i, j) cell of the global map.

Expression (3) is a rule for iteratively updating estimates of the probabilities of finding features of selected linear roadway objects in the cells of the local map. It should be noted that this update consists only of a summation operation, which makes the proposed method computationally efficient.

It should be noted that an a priori estimate of the probability of finding a feature of a selected linear roadway object, stored in cells of the global map, is performed for each cell as follows:

$$l^{APR} = \log\left(\frac{1-p_{APR}}{p_{APR}}\right), \quad (4)$$

where $P_{APR}$ is the a priori probability of finding a feature of a selected linear roadway object.

When summing the values of the logarithms, the maximum and minimum allowable values of the sums in cells $l \in [l_{max}, l_{min}]$ are also entered, respectively. These restrictions are necessary to prevent unlimited growth of values in map cells, which is possible, for example, when the AV is stationary or the same local area of the map is in the field of view for a long time.

At the final stage, the resulting roadway map is obtained by binarization of the cells obtained by combining the map according to the threshold value of the probability of finding a feature of the selected linear roadway object, while it is believed that if the cell value is greater than the threshold value, then the space contains a linear feature of the roadway object, if the value is below threshold, then there is no linear object.

Thus, the implementation of the terrain mapping method for AVs provides the possibility of forming a high-precision roadbed map reflecting information about the route of the AV, which can be vectorized and used as a digital map for positioning a highly automated AV, while regular updating of the digital map allows maintaining the current version, which increases positioning accuracy.

**Claims**

1. A method of terrain mapping for autonomous vehicles (AV), comprising the following steps:

   forming a global map of the area and dividing it into cells, wherein the global map is recorded into a mapping module;

   sending using cameras installed on AV images to the mapping module;

   processing the image to define linear objects of the roadway, and forming a map of features of allocated linear objects of the roadway;

   dividing a local map into cells to account for errors in detection of linear objects of the roadway;

   performing initial assessment of the probability of finding features of a selected linear objects in the cells of the global and local maps, and the evaluation of probabilities in the cells of a global map is performed a priori;

   recording features of dedicated linear objects of the roadway in the appropriate cells of global and local maps including previously known camera calibration and the current location of the AV, wherein the features of selected linear objects of the roadway transmitted in the cells of the local map in the form of the salient points of allocated polylines;

   forming lines using salient points of allocated polylines;

   performing evaluation in each cell of the local map for the probability of finding the feature of a selected linear object of the roadway;

   superimposing resulting part of the local map on the corresponding part of a global map, and performing summation of the estimation probability to detect the selected linear object of the roadway considering previous assessments;

   forming a resulting map of the roadway by the binarization of the map cells to the threshold probabilities of finding the feature of a selected linear object of the roadway.

2. The method of terrain mapping for AV according to claim 1, wherein the recognition of linear objects of the roadway from images obtained from the camera is carried out using a windowed Hough transform.

Fig. 1

## INTERNATIONAL SEARCH REPORT

| | International application No. |
|---|---|
| | PCT/RU 2022/050202 |

**A. CLASSIFICATION OF SUBJECT MATTER**
G06V 20/56 (2022.01); G06V 10/22 (2022.01); G01S 13/89 (2006.01)

According to International Patent Classification (IPC) or to both national classification and IPC

**B. FIELDS SEARCHED**

Minimum documentation searched (classification system followed by classification symbols)

G06V 10/00, 10/20, 10/22, 20/00, 20/50, 20/56, G06K 9/00, 9/62, G01S 13/00, 13/88, 13/89, G01C 21/00, 21/10, 21/16, 21/20, G06T 7/00, 7/60, 7/70, 7/73

Documentation searched other than minimum documentation to the extent that such documents are included in the fields searched

Electronic data base consulted during the international search (name of data base and, where practicable, search terms used)
PatSearch (RUPTO internal), USPTO, PAJ, K-PION, Esp@cenet, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| A | US 2020/0073388 A1 (MOBILEYE VISION TECHNOLOGIES LTD.) 05.03.2020 | 1-2 |
| A | US 2021/0241003 A1 (SAMSUNG ELECTRONICS CO., LTD) 05.08.2021 | 1-2 |
| A | US 2020/0116499 A1 (SAMSUNG ELECTRONICS CO., LTD) 16.04.2020 | 1-2 |
| A | WO 2018/044191 A1 (LIMITED LIABILITY COMPANY "TOPCON POSITIONING SYSTEMS") 08.03.2018 | 1-2 |
| A | US 2020/0285866 A1 (HYUNDAI MOBIS CO., LTD) 10.09.2020 | 1-2 |
| A | WO 2020/187483 A1 (HELLA GMBH & CO KGAA) 24.09.2020 | 1-2 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 October 2022 (10.10.2022) | 10 November 2022 (10.11.2022) |

| Name and mailing address of the ISA/ RU | Authorized officer |
|---|---|
| | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2683618
- RU 2740229
- RU 2571871
- US 2018053060 A
- US 2021180980 A